# EUROPÄISCHE PATENTSCHRIFT

(11) **EP 2 376 211 B1**
(45) Veröffentlichungstag und Bekanntmachung des Hinweises auf die Patenterteilung: **05.12.2018**
(21) Anmeldenummer: 09756273.0
(22) Anmeldetag: 27.10.2009
(51) Int. Cl.: F01M 11/03, C10M 175/00, F01M 1/10, F16N 39/02, F16N 39/04, F16N 39/06

(54) **MOBILES REINIGUNGSVERFAHREN UND MOBILES REINIGUNGSMODUL FÜR FLÜSSIGKEITEN**
MOBILE CLEANING METHOD AND MOBILE CLEANING MODULE FOR FLUIDS
PROCÉDÉ DE PURIFICATION MOBILE ET MODULE DE PURIFICATION MOBILE POUR LIQUIDES

(30) Priorität: 27.10.2008 CH 16812008
(43) Veröffentlichungstag der Anmeldung: 19.10.2011
(73) Patentinhaber: Kemper, Ernst Heinrich, 59071 Hamm (DE)
(72) Erfinder: Kemper, Markus, 59071 Hamm (DE)
(74) Vertreter: Frischknecht, Harry Ralph
(86) Internationale Anmeldenummer: PCT/EP2009/064131
(87) Internationale Veröffentlichungsnummer: WO 2010/049411

(56) Entgegenhaltungen:
- EP-A2- 1 462 708
- DE-A1- 2 744 776
- US-A- 4 179 019
- US-A- 5 900 155
- US-A- 5 964 256
- US-A1- 2002 158 003
- US-B1- 6 334 950

## Beschreibung

### Technisches Gebiet der Erfindung

Die vorliegende Erfindung betrifft ein Reinigungsverfahren für Flüssigkeiten gemäss den Merkmalen des Oberbegriffs des Anspruchs 1, sowie eine mobiles Reinigungsmodul zur Reinigung von Flüssigkeiten gemäss den Merkmalen des Anspruchs 8.

### Stand der Technik

Aus dem Stand der Technik sind unterschiedlichste Arten der Reinigung von Flüssigkeiten bei mobilen Vorrichtungen bekannt.

Beispielsweise ist bei einem Kraftfahrzeug ein Ölfilter vorhanden, welcher im Ölkreislauf angeordnet ist, und so das Schmieröl während des Betriebes kontinuierlich filtert. Diese Art von Filterung hat den Vorteil, dass der Schmierstoff kontinuierlich gefiltert wird. Allerdings ist es nachteilig, dass der Filter im Laufe der Zeit stark verschmutzt ist und unerwünschte Partikel, wie beispielsweise Schwermetallpartikel, dem Schmierstoff wieder zugibt, sofern der Filter nicht rechtzeitig ausgetauscht wird.

Ferner wird in periodischen Abständen der gesamte Schmierstoff ausgetauscht. Dabei wird der alte Schmierstoff aus dem Schmierstoffkreislauf entfernt und durch neuen Schmierstoff ersetzt. Nachteilig hier ist die Tatsache, dass die aus dem Flüssigkeitskreislauf entfernte Flüssigkeit entsorgt wird.

Aus den Druckschriften US 5,900,155; US 2002/158003; US 4,179,019; US 5,964,256; US 6,334,950; EP 1 462 708 und DE 27 44 776 sind verschiedene Reinigungsvorrichtungen für Fluide bekannt. Allerdings weisen die beschriebenen Vorrichtungen den Nachteil auf, dass diese nicht effektiv betrieben werden können und die Vorrichtung, in welcher das zu reinigende Fluid eingesetzt wird, nur unzureichend geschützt ist.

### Darstellung der Erfindung

Ausgehend vom Stand der Technik liegt der Erfindung eine Aufgabe zugrunde, eine Vorrichtung, sowie ein Verfahren anzugeben, welche die Nachteile des Standes der Technik überwindet. Insbesondere ist es eine Aufgabe der vorliegenden Erfindung, eine Vorrichtung bzw. ein Verfahren bereitzustellen, mit welcher(m) eine Flüssigkeit eines Flüssigkreislaufes in einer mobilen Vorrichtung periodisch reinigbar ist, wobei die Reinigung ausserhalb des Flüssigkreislaufes erfolgen soll.

Diese Aufgabe löst ein Verfahren mit den Merkmalen des Patentanspruchs 1. Demgemäss wird ein Reinigungsverfahren für Flüssigkeiten eines Flüssigkeitskreislaufes einer mobilen Vorrichtung mit einem mobilen Reinigungsmodul angegeben, wobei das mobile Reinigungsmodul mindestens ein Verbindungselement zur Herstellung einer Verbindung mit dem Flüssigkeitskreislauf, so dass die Flüssigkeit aus dem Flüssigkeitskreislauf entnehmbar ist, mindestens eine Filtereinheit, zur Reinigung der Flüssigkeit, und ein Verbindungselement zur Herstellung einer Verbindung mit dem Flüssigkeitskreislauf, so dass die Flüssigkeit dem Flüssigkeitskreislauf wieder zuführbar ist, umfasst. In einem ersten Schritt des Verfahrens wird das mobile Reinigungsmodul über die Verbindungselemente mit dem Flüssigkeitskreislauf verbunden. In einem nächsten Schritt wird die Flüssigkeit aus dem Flüssigkeitskreislauf mindestens teilweise, vorzugsweise vollständig, entfernt. Anschliessend wird die Flüssigkeit bevorzugt auf eine vorbestimmte Temperatur erwärmt oder abgekühlt und nach dem Erreichen der vorbestimmten Temperatur wird die Flüssigkeit durch die Filtereinheit geführt. In einem letzten Schritt kann die gereinigte Flüssigkeit dem Flüssigkeitskreislauf der mobilen Vorrichtung wieder zugeführt werden. Dabei wird vor und/oder nach der Filtereinheit eine physikalische Eigenschaft oder eine physikalische Eigenschaft und eine chemische Eigenschaft der Flüssigkeit bestimmt.

Bevorzugterweise umfasst die Bestimmung der Eigenschaft die Messung eines Istwertes der Viskosität mittels eines Viskosimeter, und dass dieser Istwert mit einem vorbestimmten Sollwert verglichen wird,
wobei bei der Messung der Viskosität nach der Filtereinheit und beim Überschreiten einer vorbestimmten Abweichung zwischen Istwert und Sollwert, die Viskosität durch Beigabe eines Additivs und/oder einer zur Flüssigkeit artgleichen Flüssigkeit korrigiert wird, oder
wobei bei der Messung der Viskosität nach der Filtereinheit und beim Überschreiten einer vorbestimmten Abweichung zwischen Istwert und Sollwert, die Flüssigkeit in einen Tank der Reinigungsvorrichtung geführt wird, wobei dann der mobilen Vorrichtung frische Flüssigkeit zugeführt wird.

Erfindungsgemäß umfasst die Bestimmung der Eigenschaft die Erfassung der Anzahl der sich in der Flüssigkeit befindlichen metallischen Partikel,
wobei bei der Bestimmung vor der Filtereinheit und wenn die Anzahl der erfassten Partikel grösser ist, als ein vordefinierter Wert, ein Warnsignal generiert wird, welches den Benutzer auf einen Defekt an der mobilen Vorrichtung hinweist, oder
wobei bei der Bestimmung nach der Filtereinheit und beim Überschreiten einer vorbestimmten Abweichung zwischen Istwert und Sollwert, die Flüssigkeit in einen Tank der Reinigungsvorrichtung geführt wird, wobei dann der mobilen Vorrichtung frische Flüssigkeit zugeführt wird.

Die Bestimmung der chemischen und/oder physikalischen Eigenschaft hat den Vorteil, dass Rückschlüsse über die Qualität der Reinigung und/oder über den Verschleiss in der mobilen Vorrichtung gezogen werden können.

Besonders bevorzugt wird die Flüssigkeit im Bereich der Verbindungselemente durch Erhitzung oder Abkühlung auf eine vorbestimmte Temperatur gebracht.

Vorzugsweise wird vor und/oder nach der Filtereinheit ein vorbestimmtes Volumen der Flüssigkeit durch ein Absperrorgan in mindestens einen externen Behälter geführt wird, wobei das entnommene Volumen durch Zuführen von frischer Flüssigkeit vor der Rückführung ausgeglichen wird. Das abgeführte Volumen wird dann in einem externen Behälter aufbewahrt, wobei dieser für spätere Analysezwecke beiseite gestellt werden kann.

Vorzugsweise wird das Entnahmevolumen der Flüssigkeit beim oder nach dem Entfernen der Flüssigkeit aus dem Flüssigkeitskreislauf erfasst. Anschliessend wird ein Differenzvolumen zu einem vorgegebenen Sollvolumen ermittelt. Das Differenzvolumen der Flüssigkeit wird dann dem Flüssigkeitskreislauf insbesondere in der Form von neuer bzw. frischer Flüssigkeit zugeführt.

Vorzugsweise wird der aus dem Flüssigkeitskreislauf entnommenen Flüssigkeit vor der Rückführung in den Flüssigkeitskreislauf kontinuierlich eine neue bzw. frische Flüssigkeit beigegeben. Das Rückführvolumen wird bei oder vor der Rückführung in den Flüssigkeitskreislauf erfasst. Das Verfahren wird dann so lange angewandt, bis das Rückführvolumen einem vorbestimmten Sollvolumen entspricht. Optional wird auch das Entnahmevolumen der Flüssigkeit wird beim oder nach dem Entfernen der Flüssigkeit aus dem Flüssigkeitskreislauf erfasst.

Ein mobiles Reinigungsmodul zur Durchführung des Verfahrens umfasst mindestens eine Anschlussstelle zur Verbindung mit der mindestens einen Anschlussstelle der mobilen Vorrichtung, mindestens ein Messmittel zur Bestimmung von mindestens einer physikalischen Eigenschaft oder mindestens einer physikalischen und mindestens einer chemischen Eigenschaft der Flüssigkeit und eine Filtereinheit, welche mit der mindestens einen Anschlussstelle über ein Rohrleitungssystem in Verbindung steht. Erfindungsgemäß ist ein Temperaturelement vorgesehen, welches die vom Flüssigkeitskreislauf entnommene Flüssigkeit auf eine vorbestimmte Temperatur erhitzt oder abkühlt. Über die Verbindung der Anschlussstellen der mobilen Vorrichtung mit denjenigen des mobilen Reinigungsmoduls ist die Flüssigkeit aus Flüssigkeitskreislauf der mobilen Vorrichtung entnehmbar. Die Flüssigkeit ist durch das Filterelement hindurchführbar und reinigbar. Über die besagte Verbindung ist die gereinigte Flüssigkeit wieder in den Flüssigkeitskreislauf zuführbar.

Vorzugsweise umfasst das Reinigungsmodul weiterhin eine Pumpe, mittels welcher die Flüssigkeit aus dem Flüssigkeitskreislauf entnehmbar ist und/oder die Flüssigkeit im Reinigungsmodul umwälzbar ist.

Vorzugsweise ist das Messmittel ein nach der Filtereinheit angeordnetes Viskosimeter, mit dem der Istwert der Viskosität der Flüssigkeit bestimmbar ist, wobei der Istwert mit einem vorbestimmten Sollwert vergleichbar ist, und
dass entweder beim Überschreiten einer vorbestimmten Abweichung zwischen Istwert und Sollwert, die Viskosität durch Beigabe eines Additivs und/oder einer zur Flüssigkeit artgleichen Flüssigkeit über ein mit dem Leitungssystem in Verbindung stehendem Vorratsbehälter mit Dosiervorrichtung korrigierbar ist, oder
dass in einem optionalen Schritt beim Überschreiten einer vorbestimmten Abweichung zwischen Istwert und Sollwert, die Flüssigkeit in einen Tank der Reinigungsvorrichtung geführt wird, wobei dann der mobilen Vorrichtung frische Flüssigkeit zugeführt wird.

Erfindungsgemäß ist das Messmittel mindestens einen vor und/oder nach der Filtereinheit angeordneter Qualitätssensor, mit welchem die metallischen Partikel in der Flüssigkeit erfassbar sind,
wobei bei der Bestimmung vor der Filtereinheit und, wenn die Anzahl der erfassten Partikel grösser ist als ein vordefinierter Wert, ein Warnsignal generiert wird, welches den Benutzer auf einen Defekt an der mobilen Vorrichtung hinweist, oder
wobei bei der Bestimmung nach der Filtereinheit und beim Überschreiten einer vorbestimmten Abweichung zwischen Istwert und Sollwert, die Flüssigkeit in einen Tank der Reinigungsvorrichtung geführt wird, wobei dann der mobilen Vorrichtung frische Flüssigkeit zugeführt wird.

Qualitätssensor und Viskosimeter können als Alternativen oder gemeinsam angeordnet werden.

Vorzugsweise ist das Temperaturelement im Bereich der Verbindungsstelle, insbesondere im vorderen Bereich einer Sonde, angeordnet. Dabei kann die Flüssigkeit bereits bei der Entnahme auf eine vorbestimmte Temperatur erhitzt oder abgekühlt werden.

Vorzugweise umfasst das Reinigungsmodul einen Zusatzbehälter zur Aufnahme der gereinigten Flüssigkeit und/oder einer neuen (i.e. frischer) Flüssigkeit und/oder einem Additiv. Die Flüssigkeit im Zusatzbehälter ist in den Flüssigkeitskreislauf der mobilen Vorrichtung abgebbar.

Weitere vorteilhafte Ausführungsformen sind in den Unteransprüchen gekennzeichnet.

### Kurze Beschreibung der Zeichnung

Bevorzugte Ausführungsformen werden im folgenden anhand der Zeichnung beispielhaft näher beschrieben. Es zeigen:
- Fig. 1: eine Ansicht eines vereinfachten Prinzipschemas eines mobilen Reinigungsmoduls zur Entnahme, Aufbereitung und Rückführung einer Flüssigkeit aus einer mobilen Vorrichtung (nicht erfindungsgemäß);
- Fig. 2: eine Ansicht eines weiteren vereinfachten Prinzipschemas eines mobilen Reinigungsmoduls zur Entnahme, Aufbereitung und Rückführung einer Flüssigkeit aus einer mobilen Vorrichtung (nicht erfindungsgemäß);
- Fig. 3: eine Ansicht eines detaillierten Prinzipschemas von Figur 2;
- Fig. 4: eine detaillierte Ansicht eines Entnahmekreislaufes zur Entnahme einer Flüssigkeit aus einem Flüssigkeitskreislauf (nicht erfindungsgemäß);
- Fig. 5: eine detaillierte Ansicht des Kreislaufes zur Erhitzung/Abkühlung einer entnommenen Flüssigkeit (nicht erfindungsgemäß);
- Fig. 6: eine detaillierte Ansicht eines Reinigungskreislaufes zur Reinigung der entnommenen Flüssigkeit (nicht erfindungsgemäß);
- Fig. 7: eine detaillierte Ansicht der Rückführung der gereinigten Flüssigkeit in den Flüssigkeitskreislauf (nicht erfindungsgemäß); und
- Fig. 8: eine Ansicht eines detaillierten Prinzipschemas eines Reinigungsmoduls zur Entnahme, Aufbereitung und Rückführung einer Flüssigkeit aus einer mobilen Vorrichtung nach einer weiteren Ausführungsform gemäss der vorliegenden Erfindung.

### Beschreibung von bevorzugten Ausführungsbeispielen

Mit Bezug zu den Zeichnungen werden mögliche Ausführungsbeispiele beschrieben. Die Zeichnungen und die Beschreibung zeigen Ausführungsbeispiele und sollten nicht ausgelegt werden, um die Erfindung einzuschränken, welche durch die Ansprüche definiert ist.

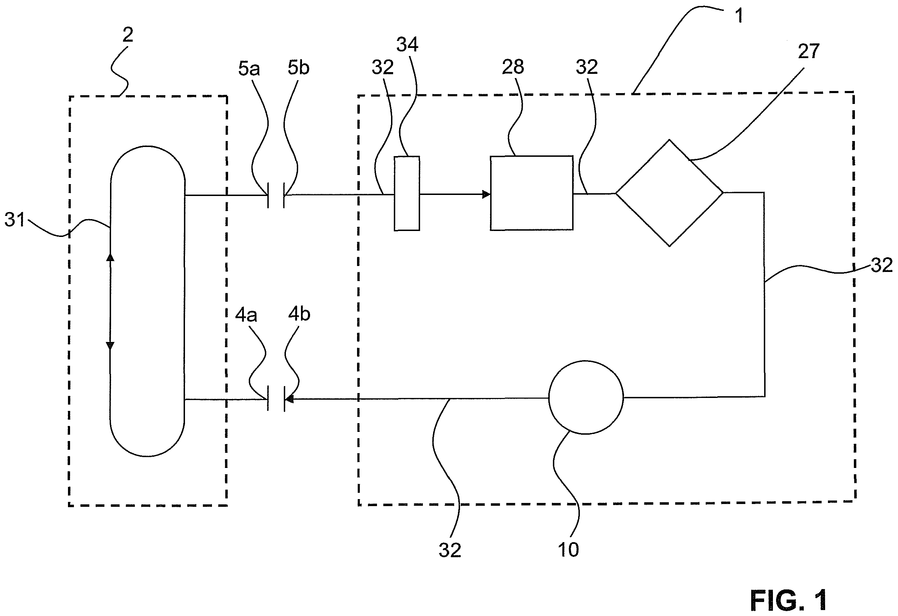

Die Figur 1 zeigt eine Ansicht eines Prinzipschemas eines Systems. Das System umfasst im wesentlichen ein mobiles Reinigungsmodul 1, welche an eine mobile Vorrichtung 2 anschliessbar ist. Das mobile Reinigungsmodul 1 kann mit der mobilen Vorrichtung 2 derart verbunden werden, dass die verschmutzte Flüssigkeit aus dem Flüssigkeitskreislauf 31 der mobilen Vorrichtung 2 entfernt werden kann, dass die verschmutzte Flüssigkeit im mobilen Reinigungsmodul 1 aufbereitet bzw. gereinigt werden kann, und dass die aufbereitete Flüssigkeit dem Flüssigkeitskreislauf 31 wieder zugeführt werden kann.

Unter einer mobilen Vorrichtung 2 wird jegliche Art von Vorrichtung verstanden, welche in der Lage ist, eine Masse mittels eines Antriebes in seiner vertikalen und/oder horizontalen Lage zu bewegen. Beispielhaft sei hier ein Kraftfahrzeug, ein Lastkraftwagen, ein Aufzug, ein Schiff etc. genannt. Alle diese mobilen Vorrichtungen umfassen mindestens einen Flüssigkeitskreislauf 31, in welchem eine Flüssigkeit zirkuliert. Bei einem Kraftfahrzeug sind hier beispielsweise der Schmierkreislauf, in dem ein Schmieröl zirkuliert, und die Bremskreise, in denen eine Bremsflüssigkeit vorhanden ist, zu nennen. Andere Flüssigkeitskreisläufe, wie beispielsweise Kühlmittelkreisläufe einer an der mobilen Vorrichtung angeordneten Klimaanlage, sind ebenfalls denkbar. Der Flüssigkreislauf 31 umfasst typischerweise mindestens zwei Anschlussstellen 4a, 5a, an welche das mobile Reinigungsmodul 1 angeschlossen werden kann. Über die eine Anschlussstelle 5a kann die verschmutzte Flüssigkeit aus dem Flüssigkeitskreislauf 31 entfernt werden und über die andere Anschlussstelle 4a kann die durch das mobile Reinigungsmodul 1 aufbereitete oder gereinigte Flüssigkeit dem Flüssigkeitskreislauf 31 wieder zugeführt werden.

Das mobile Reinigungsmodul 1 umfasst hier im wesentlichen zwei Anschlussstellen 4b, 5b, mindestens eine Filtereinheit 27 und eine Pumpe 10. Ein Rohrsystem 32 verbindet die Anschlussstellen 4b, 5b mit der Filtereinheit 27 und der Pumpe 10, welche seriell zueinander angeordnet sind. Ferner umfasst das mobile Reinigungsmodul 1 geeignete Eingabemittel und Steuereinrichtungen, um den Reinigungsvorgang zu aktivieren bzw. die Pumpe 10 in Betrieb zu setzen. Die Eingabemittel können beispielsweise ein Steuerpult mit verschiedenen Bedienelementen, wie Taster etc., oder ein berührungssenstiver Bildschirm umfassen. Die Steuereinrichtung wird dabei über eine Stromversorgung mit elektrischer Energie versorgt und dient der Steuerung der Pumpe bzw. der anderen für den Betrieb erforderlichen Element. Zudem kann eine Anzeigeinrichtung vorhanden sein, welche dem Benutzer Hinweise über den Fortschritt des Reinigungsvorganges gibt.

Die zwei Anschlussstellen 4b, 5b sind mit den korrespondierenden Anschlussstellen 4a, 5b der mobilen Vorrichtung 1 verbindbar. Hierfür können beispielsweise entsprechende Schnellkupplungen vorgesehen sein.

Die Filtereinheit 27 setzt sich aus mindestens einem Filter, bevorzugt aus mindestens zwei parallel zueinander angeordneten Filtern zusammen. Besonders bevorzugt werden vier parallel zueinander angeordnete Filter eingesetzt. Alternativ und je nach Anforderung bezüglich des zu erzielenden Reinheitsgrades können auch drei, fünf, sechs oder mehr Filter angeordnet werden. Vorzugsweise ist die Filtereinheit 27 mit Schnellverschlüssen mit dem Rohrsystem 32 verbunden, was ein schnelles Austauschen von verschmutzten Filtern erlaubt.

Um den Durchsatz und somit die Reinigungsleistung des mobilen Reinigungsmoduls 1 zu erhöhen, wäre es zudem denkbar, zwei oder mehrere Filtereinheiten 27 nebeneinander, also parallel zueinander anzuordnen. Alternativ können die Filtereinheiten 27 auch hintereinander, also seriell zueinander, angeordnet sein, wobei dann vorzugsweise unterschiedliche Filter eingesetzt werden. Letztere Anordnung wird bevorzugt dann gewählt, wenn höhere Anforderungen bezüglich dem Grad der Filtrierung der Flüssigkeit.

Im Falle der Ölreinigung können beispielsweise Papierfilter eingesetzt werden. Andere Filter, wie beispielsweise Metallfilter oder Glasfaserfilter, sind aber ebenfalls denkbar.

Die Pumpe 10 wird durch einen hier nicht dargestellten Elektromotor betrieben. Die Pumpe 10 kann beispielsweise eine selbstansaugende Flügelzellenpumpe sein. Je nach Flüssigkeit im Flüssigkeitskreislauf kann aber auch eine andere Pumpe gewählt werden.

Sobald nun die mobile Reinigungsvorrichtung 1 mit dem Flüssigkeitskreislauf 31 verbunden wurde, kann die Pumpe 10 in Betrieb gesetzt werden. Dabei wird die Flüssigkeit aus dem Flüssigkeitskreislauf über die Verbindungsstelle 5a-5b entfernt. Durch das Rohrsystem 32 wird die Flüssigkeit der Filtereinheit 27 zugeleitet. Durch die Filtereinheit 27 wird die Flüssigkeit gereinigt. Das heisst, dass Verunreinigungen, wie beispielsweise Schwermetallpartikel, Staubpartikel etc., in der Filtereinheit 27 zurückbleiben. Die Flüssigkeit verlässt die Filtereinheit 27 in gereinigter und demnach einsetzbarer bzw. gebrauchsfertiger Form. Über die Pumpe 10 wird die Flüssigkeit dann über das Rohrleitungssystem 32 und die Verbindungsstelle 4a-4b dem Flüssigkeitskreislauf 31 hinzugeführt. Die Verbindungsstelle kann beispielsweise die Ölablassschraube sein oder der Ölmessstab sein.

Als Verbindungsstelle 5 kann beispielsweise bei einem Kraftfahrzeug oder einem Lastkraftwagen die Hülse des Ölmessstabes dienen. Dabei hat die Verbindungsstelle 5 die Form einer Sonde, welche in die Hülse eingeführt werden kann. Die Sonde kann beispielsweise flexibel oder starr ausgeführt sein. Die flexible Lösung ist zu bevorzugen, wenn die Sonde bei verschiedenen Kraftfahrzeug-Typen eingesetzt werden soll. Die Sonde ist im wesentlichen zylindrisch ausgebildet und weist eine Öffnung auf, welche sich durch die Gesamtlänge der Sonde erstreckt und durch welche das Öl entnommen werden kann.

Der Aussendurchmesser der Sonde kann im Bereich von 5 bis 15 mm liegen. Bevorzugterweise könnte ein Satz Sonden mit abgestuften Durchmessern von 5, 6, 7, 8 und 12 mm bereitgestellt werden. Zusätzlich kann auf dem Aussendruchmesser der Sonde ein Dichtungselement, wie beispielsweise ein O-Ring angeordnet sein, welcher eine Dichtwirkung zwischen Sonde und Hülse bereitstellt.

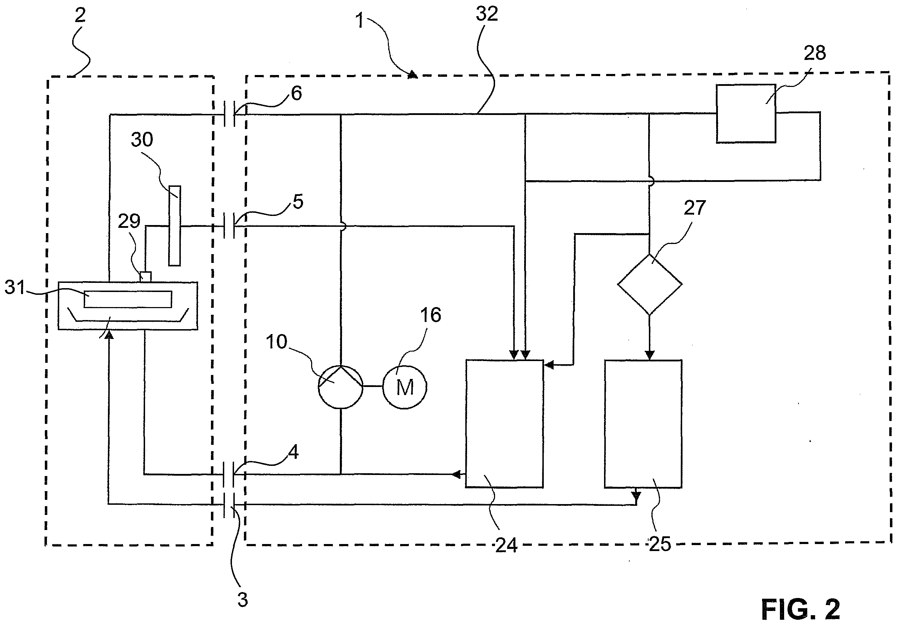

Bei der Entnahme der Flüssigkeit wird diese möglichst vollständig aus dem Flüssigkeitskreislauf der mobilen Vorrichtung entnommen. Für die Aufnahme der Flüssigkeit ist in der Reinigungsvorrichtung ein Behälter angeordnet, welche die Flüssigkeit aufnimmt. Der Behälter ist den Figuren 2 bis 8 mit dem Bezugszeichen 24 versehen.

In einer alternativen Ausführungsform wäre es zudem denkbar die Entnahme der Flüssigkeit aus der mobilen Vorrichtung ohne die Pumpe zu betreiben. Dabei wird das Öl bei der mobilen Vorrichtung nicht über die Hülse des Ölmessstabes sondern beispielsweise über die Ölablassstelle (Ölablassschraube) aus dem Kreislauf entfernt und über die Wirkung der Schwerkraft durch die Vorrichtung geleitet. Die Umwälzung der Flüssigkeit im Reinigungsmodul erfolgt dann aber wiederum mit einer Pumpe. Anstelle der direkten Rückführung folgt in diesem Fall eine indirekte Rückführung, wobei das Öl in einem in der Vorrichtung angeordneten Tank zwischenzeitlich gespeichert wird.

In einer weiteren Ausführungsform wäre es zudem denkbar, dass die Flüssigkeit zuerst durch eine Auffangwanne, die an der mobilen Vorrichtung angeordnet ist, aufgenommen wird. Dabei ist die Anschlussstelle zur Entnahme der Flüssigkeit an dieser Auffangwanne angeformt und das mobile Reinigungsmodul 1 kann an diese Anschlussstelle angeschlossen werden. In dieser Ausführungsform ist die Auffangwanne als ein Teil des Flüssigkeitskreislaufes zu betrachten.

Alternativ kann das mobile Reinigungsmodul auch einen Zusatzbehälter umfassen, welcher mit einer neuen bzw. frischen Flüssigkeit, die artgleich zur derjenigen im Flüssigkeitskreislauf 31 ist, und/oder einem Additiv befüllt ist. Diese neue Flüssigkeit und/oder das Additiv kann dann dem Flüssigkeitskreislauf zugeführt werden. So können beispielsweise Leckageverluste, die über die Zeit im Flüssigkeitskreislauf 31 auftreten können, ausgeglichen werden.

Bei der Reinigung eines Öles eines Kraftfahrzeuges wird das Öl vorzugsweise mit einer Temperatur von etwa 60°C aus dem Kraftfahrzeug entfernt, was den Vorteil hat, dass es eine günstige Viskosität aufweist, um einerseits durch die Sonde und anderseits durch die Filtereinheit 27 zu fliessen. Bei einem Kraftfahrzeug hat der Benutzer den Vorteil, dass er den Motor des Kraftfahrzeuges nicht abkühlen muss, bis er den Reinigungsvorgang starten kann. Um die erfindungsgemässe Vorrichtung jedoch mit einer grösstmöglichen Flexibilität auszustatten, kann zusätzlich vor der Filtereinheit 27 ein Temperaturelement 28 vorgesehen sein. Dieses Temperaturelement 28 dient der Erwärmung oder Abkühlung der Flüssigkeit, so dass die Betriebstemperatur für die Filtereinheit 27 erreicht werden kann. Als Temperaturelement können beispielsweise Heizpatronen dienen. Es hat sich gezeigt, dass die Vorrichtung besonders effizient betrieben werden kann, wenn ein Schmieröl eine Temperatur im Bereich von beispielsweise 40°C bis 90°C, insbesondere 45°C bis 75°C besonders bevorzugt über mindestens 50°C aufweist.

Vor dem Heizelement 28 kann ferner ein Metallabscheider 34, welcher in der Figur 1 dargestellt wird, vorgesehen sein, welcher ein Magnetelement umfasst. Dabei bleiben metallische Elemente, welche sich in der Flüssigkeit befinden, am Magnetelement haften. Vorzugsweise ist der Metalabscheider 34 derart ausgebildet, dass er aus dem mobilen Reinigungsmodul entfernt und ausgetauscht bzw. gereinigt werden kann.

In einer alternativen Ausführungsform kann das Heizelement 28 zudem direkt im vorderen Bereich der Sonde angeordnet sein. Diese Ausführungsform ist vorteilhaft, da direkt im Bereich der Entnahmestelle die Flüssigkeit erwärmt wird, was einen besseren Durchfluss durch die Sonde bereitstellt. Zudem wird die Flüssigkeit bereits vorgewärmt in das mobile Reinigungsmodul 1 eingeleitet.

Die in der Figur 1 gezeigte Variante ist besonders vorteilhaft, da beispielsweise eine kontinuierliche Reinigung der Flüssigkeit bereitgestellt werden kann. Das heisst im Falle eines Kraftfahrzeuges, dass das mobile Reinigungsmodul 1 entsprechend mit dem Kraftfahrzeug 2 verbunden wird, und dann kontinuierlich die Flüssigkeit durch den Flüssigkeitskreislauf 31 des Kraftfahrzeuges und den Kreislauf des mobilen Reinigungsmoduls 1 fördert. Dies wird solange ausgeführt, bis der gewünschte Sauberkeitsgrad erreicht wird. Alternativ kann auch die gesamte Flüssigkeit aus dem Kreislauf des Kraftfahrzeuges 2 entfernt werden, wobei dann die Flüssigkeit im Reinigungsmodul 1 gespeichert wird.

Die Figur 2 zeigt eine weitere vereinfachte Darstellung eines Systems nach einer zweiten Ausführungsform. Gleiche Teile sind dabei mit gleichen Bezugszeichen versehen. Die Komponenten des mobilen Reinigungsmoduls 1 sind dabei mit der gestrichelten Umrandung zusammenfasst. Die mobile Vorrichtung 2 wird ebenfalls mit einem gestrichelten Linienzug zusammengefasst.

Die mobile Vorrichtung 1 umfasst wiederum einen Flüssigkeitskreislauf 31, welcher hier optional eine Fangwanne 30 umfasst. Ferner weist die Vorrichtung eine Ablasseinrichtung 29 auf, über welche die Flüssigkeit aus dem Kreislauf 31 entfernt werden kann.

Das mobile Reinigungsmodul 1 umfasst in dieser Ausführungsform wiederum eine Filtereinheit 27, eine Pumpe 10 mit einem Antrieb 16, und eine optionale Heizeinrichtung 28. Ferner umfasst die Vorrichtung einen Vorratsbehälter 24 für die ungereinigte Flüssigkeit und einen Vorratsbehälter 25 für die gereinigte Flüssigkeit.

Diese Ausführungsform wird nun anhand der weiteren Figuren detailliert beschrieben. Insbesondere eignet sich die zweite Ausführungsform für grössere Flüssigkeitsmengen, wie diese beispielsweise bei einem Lastkraftwagen vorhanden sind. Aber auch kleinere Flüssigkeitsmengen können problemlos damit verarbeitet werden. Im Unterschied zur ersten Ausführungsform wird die zweite Ausführungsform vorzugsweise nicht kontinuierlich betrieben. An der Stelle sei aber angemerkt, dass auch die erste Ausführungsform in einer alternativen Ausführungsform nicht kontinuierlich betrieben werden kann. Das heisst, dass in einem ersten Schritt die Flüssigkeit aus dem Flüssigkeitskreislauf 31 der mobilen Vorrichtung 2 entfernt wird. In einem zweiten Schritt wird dann die Reinigung bzw. Aufbereitung der Flüssigkeit durch das mobile Reinigungsmodul 1 durchgeführt. Als letzter Schritt folgt dann die Rückführung in den Flüssigkeitskreislauf.

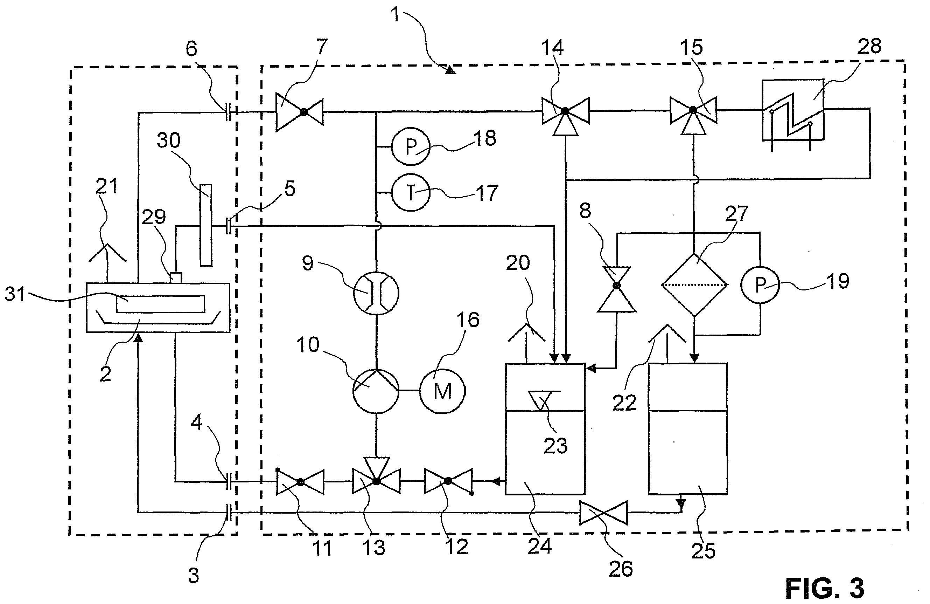

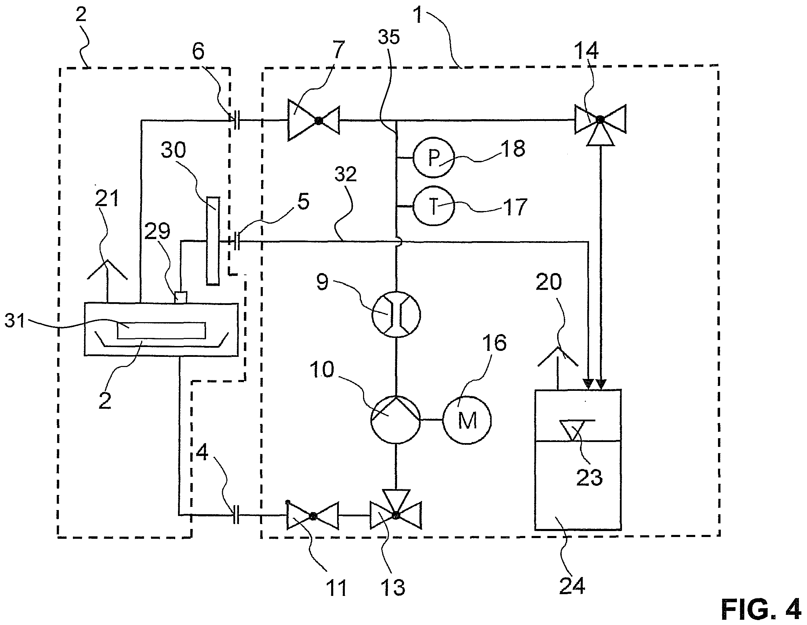

Die Figur 3 zeigt eine Ansicht eines detaillierten Prinzipschemas für ein mobiles Reinigungsmodul nach der zweiten Ausführungsform gemäss der vorliegenden Erfindung. Die Figuren 4 bis 7 zeigen Ausschnitte der entsprechenden Vorrichtungsteile, welche nachfolgend erläutert werden.

In der Figur 4 wird das Entfernen der Flüssigkeit aus der mobilen Vorrichtung dargestellt. Dabei stellt das mobile Reinigungsmodul zwei Betriebsarten bereit.

Bei der ersten Betriebsart ist das mobile Reinigungsmodul 1 über die Anschlussstelle 5 mit der mobilen Vorrichtung 2 verbunden. Insbesondere mit der Fangwanne 30, in welche die Flüssigkeit über die Ablasseinrichtung 29 an der mobilen Vorrichtung 2 hinein fliessen kann. Die Fangwanne 30 kann Teil der mobilen Vorrichtung 2 oder Teil des Reinigungsmoduls 1 sein. Über die Rohrleitung 32 fliesst die Flüssigkeit dann in den Behälter 24, welcher diese zwischenspeichert. Bei dieser Betriebsart fliesst die Flüssigkeit aufgrund der Schwerkraft in den Behälter 24.

In einer zweiten Betriebsart ist das mobile Reinigungsmodul 1 über die Anschlussstelle 6 mit der mobilen Vorrichtung 2 verbunden. Bei dieser Betriebsart wird die Flüssigkeit aktiv über die Pumpe 10 aus dem Flüssigkeitskreislauf 31 der mobilen Vorrichtung 2 gesaugt. Die Flüssigkeit passiert die Kupplung 4 und wird über das Ventil 13, welches sich in der entsprechenden Stellung befindet, durch die Pumpe 10, das Durchflussmessgerät 9 ebenfalls in den Behälter 24 gefördert. Bei einer Überlastung der mobilen Vorrichtung kann die Flüssigkeit über das Rohrleitungsstück 35 abgeführt werden.

An dieser Stelle sei erwähnt, dass im Behälter 24, der die zu reinigende Flüssigkeit aufnimmt, ferner eine Niveauüberwachung 23 vorgesehen sein kann, welche nicht nur den Füllstand des Behälters überwacht, sondern auch gleichzeitig das Volumen der aus dem Flüssigkeitskreislauf entnommenen Flüssigkeit misst. Das Volumen kann auch über Durchflussmessstellen erfasst werden. Das entnommene Volumen kann auch als Entnahmevolumen beschrieben werden.

Ferner weist der Behälter 24 ein Entlüftungselement 20 auf, welches im Falle eines Überdrucks im System diesen abbauen kann.

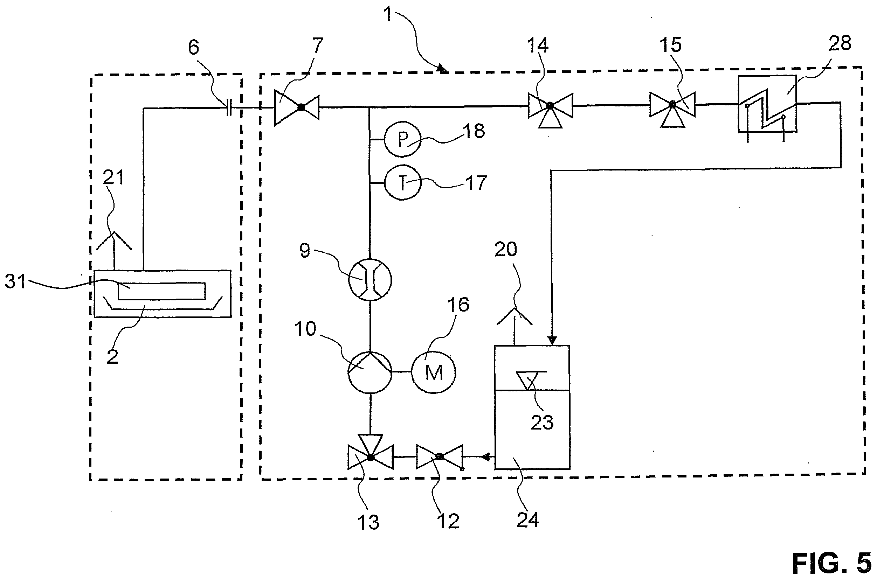

Die Figur 5 zeigt eine detaillierte Ansicht des Kreislaufes zur Erhitzung bzw. Abkühlung der mit dem Entnahmekreislauf nach Figur 4 entnommenen zu reinigenden Flüssigkeit.

Dabei wird über das entsprechend geschaltete Ventil 13 und die Pumpe 10 die zu reinigende Flüssigkeit dem Temperaturelement 28 zugeführt. Optional können in der Strecke zwischen Pumpe und Temperaturelement 28 beispielsweise ein Durchflussmessgerät 9, ein Drucksensor 18 und/oder ein Temperatursensor 17 vorgesehen sein. Die Wegeventile 14, 15 sind derart geschaltet, dass die Flüssigkeit dem Temperaturelement 28 zugeführt werden kann. Das Druckminderungsventil 7 verhindert ein Rückfluss in den Flüssigkeitskreislauf der mobilen Vorrichtung 2. Das Temperaturelement 28 dient entweder der Erhitzung oder der Abkühlung der zu reinigenden Flüssigkeit auf die Betriebstemperatur der Filtereinheit 27. Die Temperatur der Flüssigkeit kann entweder durch einen Temperatursensor im Bereich des Temperaturelementes 28 oder über den Temperatursensor 17 überwacht werden. Nach dem Temperaturelement 28 wird die zu reinigende Flüssigkeit wiederum dem Behälter 24 zugeführt. Die Flüssigkeit wird so lange im eben beschriebenen Kreislauf umgewälzt, bis die Flüssigkeit die gewünschte Temperatur aufweist. Vorteilhafte Temperaturen wurden bereits im Zusammenhang mit dem ersten Ausführungsbeispiel erwähnt.

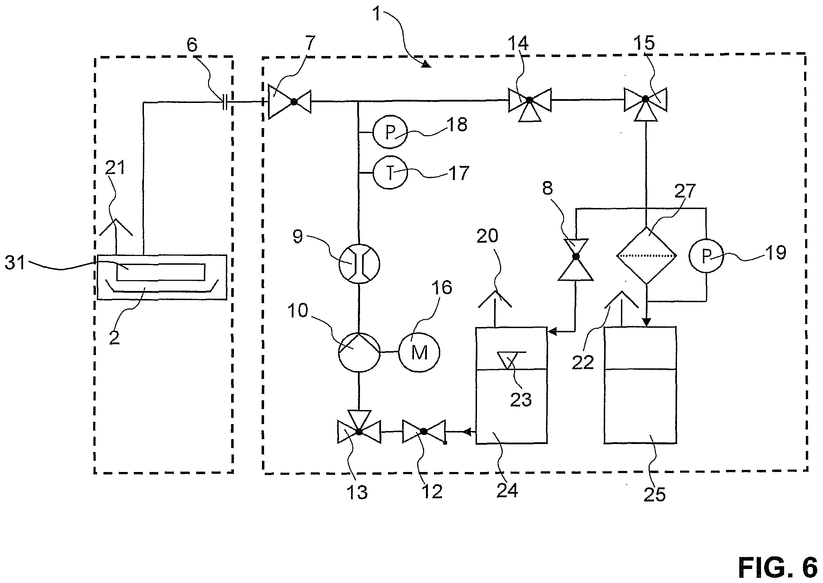

Sobald nun die Flüssigkeit die entsprechende Temperatur erreicht hat, kann in einem nächsten Schritt der Reinigungskreislauf zugeschaltet werden. Die Figur 6 zeigt den entsprechenden Kreislauf im Detail. Wiederum wird hier vom Behälter 24, der die zu reinigende Flüssigkeit beinhaltet, ausgegangen. Dabei wird das Fluid durch die Pumpe 10 im Kreislauf angetrieben und passiert in einem ersten Schritt das Rückschlagventil 12 und das entsprechend geschaltete Wegeventil 13. In einem zweiten Schritt wird die Flüssigkeit durch die Pumpe 10 und die nachfolgenden optionalen Elemente Durchflussmessgerät 9, Temperaturmessgerät 17, Drucksensor 18 durchgeführt. Ferner passiert die Flüssigkeit die Wegeventile 14, 15 und wird schliesslich der Filtereinheit 27 zugeleitet. Über der Filtereinheit 27 ist in diesem Ausführungsbeispiel eine Differenzdruckmessstelle 19 angeordnet. Sobald die Flüssigkeit die Filtereinheit passiert hat, wird diese dem Behälter 25 zugeleitet, welcher die gereinigte Flüssigkeit zwischenspeichert.

Das mit dem Bezugszeichen 8 versehene Element ist ein Bypass-Element, welches im Falle einer Verstopfung beim Filter die Flüssigkeit wieder in den Behälter 24 rückführt. Dem Benutzer wird dann angezeigt, dass die Filtereinheit 27 gereinigt oder ausgetauscht werden muss.

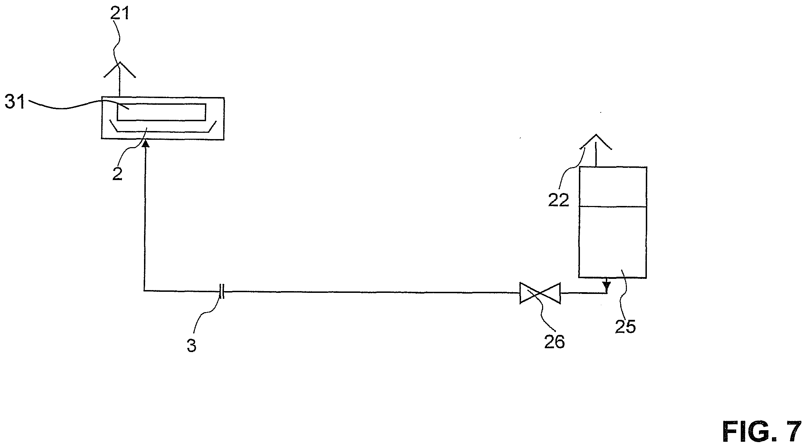

In der Figur 7 wird nun der Rücklauf der gereinigten Flüssigkeit in den Flüssigkeitskreislauf der mobilen Einrichtung 1 dargelegt. Dabei verlässt die Flüssigkeit den Behälter 25 über das Absperrventil 26 und die sich daran anschliessende Anschlussstelle 3. Anschliessend wird die Flüssigkeit wiederum dem Flüssigkeitskreislauf zugeleitet.

Die im Zusammenhang mit dem ersten Ausführungsbeispiel erwähnten Alternativen, können auch bei dem zweiten Ausführungsbeispiel eingesetzt werden. Insbesondere kann beispielsweise ein dritter Behälter vorgesehen sein, der eine artgleiche neue Flüssigkeit und/oder Additive beinhaltet, die der gereinigten Flüssigkeit beigemischt werden können.

Bei allen Ausführungsbeispielen ist es zudem möglich über Messmittel die Volumenströme zu überwachen. Beispielsweise ist es denkbar, dass das Entnahmevolumen V1 (Istvolumen) der Flüssigkeit beim oder nach dem Entfernen der Flüssigkeit aus dem Flüssigkeitskreislauf 31 erfasst wird. Anschliessend kann ein Differenzvolumen DV zu einem vorgegebenen Sollvolumen V2 ermittelt werden. Das Differenzvolumen DV kann dann durch frische Flüssigkeit dem Flüssigkeitskreislauf wieder zugeführt werden. Die Zuführung des Differenzvolumens kann beispielsweise nach oder bei der Rückführung des Istvolumens V1 erfolgen.

Alternativ kann der gereinigten Flüssigkeit vor der Rückführung in den Flüssigkeitskreislauf auch kontinuierlich neue bzw. frische Flüssigkeit beigemischt werden. Optional wird dabei vorgängig das Entnahmevolumen V1 (Istvolumen) der Flüssigkeit beim oder nach dem Entfernen derselben aus dem Flüssigkeitskreislauf erfasst. Das Rückführvolumen V2 wird bei der Rückführung der gereinigten Flüssigkeit zusammen mit der neuen Flüssigkeit erfasst. Die mobile Vorrichtung wird dann solange betrieben, bis das Rückführvolumen V2 einen vorbestimmten Sollwertvolumen erreicht hat. Mit dieser Betriebsart kann das Volumen der sich im Flüssigkeitskreislauf befindlichen Flüssigkeit in einfacher Art und Weise auf ein gewünschtes Sollvolumen ausgeglichen werden.

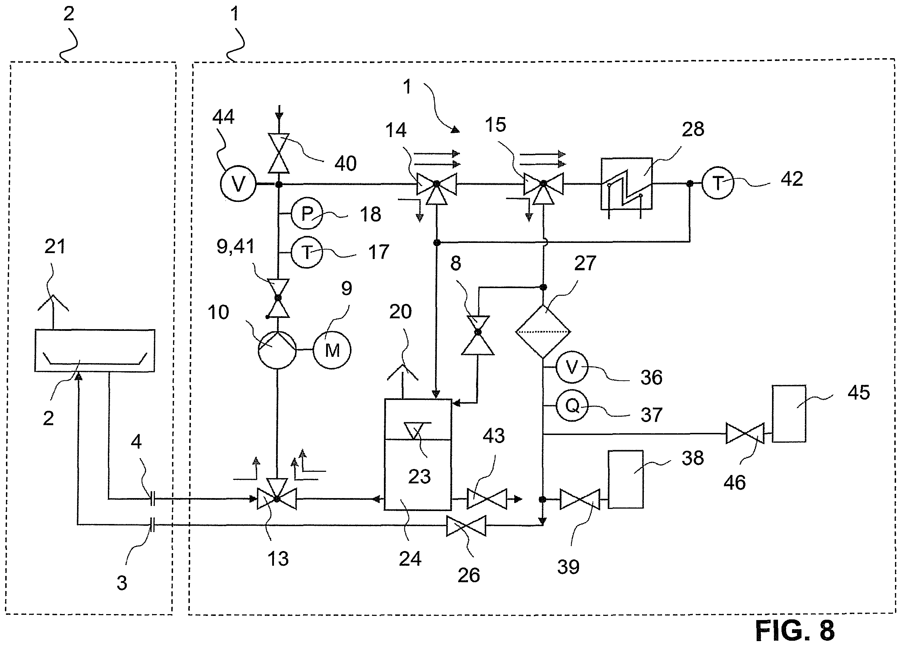

Figur 8 zeigt eine erfindungsgemäße Ausführungsform, welche im wesentlichen baugleich zur den oben beschriebenen Ausführungsbeispielen ausgebildet ist, weshalb gleiche Teile mit gleichen Bezugszeichen versehen sind.

Zusätzlich umfasst diese Ausführungsform weiter ein erstes Viskosimeter 36 und/oder einen Qualitätssensor 37, sowie mindestens einen Vorratsbehälter für mindestens ein Additiv 38 mit einem dazugehörigen Dosierventil 39. Viskosimeter 36 und Qualitätssensor 37 können auch als Messmittel bezeichnet werde und sind in Flussrichtung der zu reinigenden Flüssigkeit gesehen nach der Filtereinheit 27 angeordnet. Das heisst, das Viskosimeter 36 bzw. der Qualitätssensor 37 erfassen die entsprechenden Parameter der Flüssigkeit nach der erfolgten Filterung. Alternativ oder zusätzlich können das Viskosimeter 36 und/oder der Qualitätssensor 37 auch vor der Filtereinheit 27 angeordnet werden. Bei der zusätzlichen Anordnung kann eine Differenzmessung zwischen dem Zustand vor der Reinigung und dem Zustand nach der Reinigung ausgeführt werden.

Zusätzlich kann ein zweites Viskosimeter 44 vor der Filtereinheit 27 angeordnet sein, welches die Viskosität der Flüssigkeit vor der Filterung misst. Vorzugsweise ist das zweite Viskosimeter 44 im Bereich nach der Pumpe 10, wie in der Figur 8 gezeigt, angeordnet oder im Bereich kurz vor der Filtereinheit 27.

Vorzugsweise ist nach der Filtereinheit, wie in den oben beschriebenen Ausführungsformen ein Behälter angeordnet, in welchem die gereinigte Flüssigkeit gespeichert ist.

Mit dem Viskosimeter 36 nach der Filtereinheit lässt sich die effektive Viskosität der gereinigten Flüssigkeit bestimmen. Es handelt sich dabei um die Flüssigkeit, welche in den Kreislauf der mobilen Vorrichtung zurückgeführt wird. Dieser Istwert kann dann mit einem vordefinierten Sollwert der Viskosität, welcher von den Spezifikation der mobilen Vorrichtung, also beispielsweise von einem Kraftfahrzeug oder eine Lastkraftwagen, abhängig ist, verglichen werden. Wenn nun der Istwert dem Sollwert entspricht oder in einem vorbestimmten Toleranzfeld liegt, wird die gereinigte Flüssigkeit über das Absperrventil 26 und die Anschlussstelle 3 zurück in den Kreislauf der mobilen Vorrichtung 2 gebracht. Wenn nun der Istwert vom Sollwert abweicht bzw. ausserhalb des Toleranzfeldes liegt, so wird über das Dosierventil 39 der gereinigten Flüssigkeit ein Additiv wie nachfolgend beschrieben aus dem Additivbehälter 38 zugeführt, so dass der Istwert der Viskosität der zurückzuführenden Flüssigkeit derart korrigiert wird, dass dieser in den Toleranzbereich des Sollwerts zu liegen kommt.

Unter der Ausdrucksweise Additiv können in diesem Zusammenhang eine Flüssigkeit der gleichen Art der gereinigten Flüssigkeit und/oder eine Flüssigkeit einer von der gereinigten Flüssigkeit verschiedenen Art, also ein Additiv bzw. Zusatz im engeren Sinne, verstanden werden. Wenn sowohl Additiv als auch artgleiche Flüssigkeit hinzugefügt werden soll, können zwei getrennte Vorratsbehälter angeordnet sein, wobei diese die Flüssigkeit entweder gemeinsam über ein einziges Dosierventil 39 oder über zwei verschiedene Dosierventile in die gereinigte Flüssigkeit eingeben.

In einer alternativen Ausführungsform können auch mehrere Behälter der artgleichen Flüssigkeit angeordnet werden, wobei die Flüssigkeiten dann unterschiedliche Viskositäten haben. Mit diesen Flüssigkeiten kann dann eine Flüssigkeit mit der benötigten Viskosität gemischt werden. Dabei können zu tiefe Istwerte mit einer Flüssigkeit mit einer hohen Viskosität und zu hohe Istwerte mit einer Flüssigkeit mit einer tiefen Viskosität ausgeglichen werden.

Bei einer Abweichung des Istwertes vom Sollwert bzw. vom Toleranzfeld wird demnach artgleiche Flüssigkeit und/oder ein Additiv der gereinigten Flüssigkeit beigegeben, so dass der Zustand der Flüssigkeit verbessert wird.

Das hinzuzufügende Volumen der artgleichen Flüssigkeit bzw. des Additivs wird dabei aufgrund der Messung des Volumens der aus dem Ölkreislauf entnommenen Flüssigkeit bestimmt. Die Zusammensetzung des hinzuzufügenden Volumens wird aufgrund der Differenz zwischen Sollwert und Istwert bestimmt.

Es ist vorteilhaft, wenn das Viskosimeter 36 während des gesamten Reinigungsvorganges die Viskosität misst und dabei einen Mittelwert bestimmt, welcher mit dem Sollwert verglichen wird. Aufgrund des Ergebnisses dieses Vergleiches und des Volumens der entnommenen Flüssigkeit wird dann das hinzuzufügende Volumen bestimmt. Alternativ kann die Viskosität auch über ein bestimmtes Zeitfenster, das einen Teil der Gesamtzeit des Reinigungsvorgangs ist, gemessen werden, wobei dann der Mittelwert aus dieser Messung bestimmt wird.

Bevorzugt setzt sich die hinzuzufügende Menge aus 1% bis 5%, besonders bevorzugt aus 2% bis 3% Additiven und 99% bis 95%, besonders bevorzugt aus 98% bis 97% artgleiche Flüssigkeit zusammen.

Ein grosser Vorteil dieser Art der Bestimmung der Viskosität und der anschliessenden Korrektur auf den gewünschten Wert liegt in der Einfachheit des Verfahrens. Eine komplizierte Messanordnung entfällt, da hier lediglich die Viskosität und das Volumen der entnommenen Flüssigkeit erfasst werden müssen und daraus die hinzuzufügende Menge und Zusammensetzung, welche die Viskosität bestimmt, der hinzuzufügenden Flüssigkeit bzw. des Additivs bestimmt werden kann.

Folgendes Beispiel verdeutlicht das Verfahren. Gemäss der Spezifikation des Herstellers hat das Öl im Ölkreislauf eines Kraftfahrzeuges eine Viskosität von 5W30 aufzuweisen. Durch den Betrieb kann sich die Viskosität beispielsweise auf 5W40 verändern, was durch das Viskosimeter 36 erfasst wird. Durch Beigabe von frischem Öl kann die Viskosität des zurückzuführenden und gereinigten Öls wieder angepasst werden. Gleichzeitig kann noch ein Additiv beigegeben werden, was entweder ebenfalls die Viskosität positiv beeinflusst und/oder das zurückzuführende Öl mit weiteren Eigenschaften ausstattet.

Wenn ein Ausgleichen der Viskosität aufgrund zu grosser Differenzen nicht möglich ist, wird vor der Mündung des Dosierventils 39 in das Rohrleitungssystem die Flüssigkeit aus dem System entfernt und in einem Tank gefüllt. Diese Flüssigkeit ist dann für die Entsorgung bestimmt. Nach dem Entfernen der Flüssigkeit wird über den Vorratsbehälter 38 und das Dosierventil frische Flüssigkeit über die Reinigungsvorrichtung in die mobile Vorrichtung geleitet.

Durch das Viskosimeter 44 vor der Filtereinheit kann die Viskosität vor der Filtereinheit bestimmt werden, wobei diese Bestimmung Rückschlüsse bezüglich eventuellen Schäden an der mobilen Vorrichtung zulässt.

Der Qualitätssensor 37, welcher zusätzlich oder alternativ zur Viskositätsmessung, angeordnet werden kann, dient in der vorliegenden Ausführungsform beispielsweise der Erfassung der noch in der Flüssigkeit verbleibenden Partikel, wobei beim Überschreiten eines Grenzwertes der Benutzer darauf hingewiesen wird, den Filter zu wechseln.

Alternativ oder zusätzlich kann auch ein Qualitätssensor vor dem Filter angeordnet werden, was die Messung von Partikeln in der ungereinigten Flüssigkeit zulässt. Aufgrund der Anzahl und/oder Art der Partikel lässt dies einen Rückschluss auf den Verschleiss des Motors zu.

Falls nun entweder durch das Viskosimeter 36 oder durch den Qualitätssensor 37 ein erheblicher Qualitätsmangel an der zurückzuführenden Flüssigkeit festgestellt wird, so wird das Absperrventil 26 geschlossen und somit verhindert, dass die mit dem Qualitätsmangel behaftete Flüssigkeit zurück in den Kreislauf der mobilen Vorrichtung gelangt. Die mobile Vorrichtung wird dann durch frische Flüssigkeit befüllt.

Die hierin beschriebenen Ausführungsformen des mobilen Reinigungsmoduls können weiterhin mit einer Sendeeinheit ausgerüstet sein, welche einem zentralen Rechner Daten bezüglich des Zustandes der mobilen Reinigungsvorrichtung liefert. Die Daten können auch den genauen Standort, welcher über einen in den Zeichnungen nicht gezeigtes GPS-Modul festgestellt wird, beinhalten.

**Bezugszeichenliste**

| | | | |
|---|---|---|---|
| 1 | mobiles Reinigungsmodul | | |
| 2 | mobile Vorrichtung | 25 | Behälter für gereinigte Flüssigkeit |
| 3 | Anschlussstelle | 26 | Absperrventil |
| 4 | Anschlussstelle | 27 | Filtereinheit |
| 5 | Anschlussstelle | 28 | Temperaturelement |
| 6 | Anschlussstelle | 29 | Ablasseinrichtung an Maschine |
| 7 | Druckreduzierventil | 30 | Fangwanne |
| 8 | Druckreduzierventil | 31 | Flüssigkeitskreislauf |
| 9 | Durchflussmessgerät | 32 | Rohrsystem |
| 10 | Pumpe | 33 | Fangwanne |
| 11 | Rückschlagventil | 34 | Metallabscheider |
| 12 | Rückschlagventil | 35 | Abzweigung |
| 13 | Wegeventil | 36 | Viskosimeter |
| 14 | Wegeventil | 37 | Qualitätssensor |
| 15 | Wegeventil | 38 | Vorratsbehälter für Additive |
| 16 | Elektromotor | 39 | Dosierventil |
| 17 | Temperatursensor | 40 | Druckluftanschluss |
| 18 | Drucksensor | 41 | Rückschlagventil |
| 19 | Differenzdruckmessstelle über Filter | 42 | Temperatursensor |
| | | 43 | Ablassventil |
| 20 | Entlüftungselement | 44 | zweites Viskosimeter |
| 21 | Entlüftungselement | 45 | Tank |
| 22 | Entlüftungselement | 46 | Ventil |
| 23 | Niveauüberwachung | | |
| 24 | Behälter für zu reinigende Flüssigkeit | | |

## Patentansprüche

1. Reinigungsverfahren für Flüssigkeiten eines Flüssigkeitskreislaufes (31) einer mobilen Vorrichtung (2) mit einem mobilen Reinigungsmodul (1),
wobei das mobile Reinigungsmodul (1) mindestens ein Verbindungselement (3, 4, 5, 6) zur Herstellung einer Verbindung mit dem Flüssigkeitskreislauf (31), so dass die Flüssigkeit aus dem Flüssigkeitskreislauf (31) entnehmbar ist, mindestens eine Filtereinheit (27), zur Reinigung der Flüssigkeit, und ein Verbindungselement (3, 4) zur Herstellung einer Verbindung mit dem Flüssigkeitskreislauf (31), so dass die Flüssigkeit dem Flüssigkeitskreislauf wieder zuführbar ist, umfasst, wobei
in einem ersten Schritt das mobile Reinigungsmodul (1) über die Verbindungselemente (3, 4, 5, 6) mit dem Flüssigkeitskreislauf verbunden wird,
in einem nächsten Schritt die Flüssigkeit aus dem Flüssigkeitskreislauf (31) mindestens teilweise, vorzugsweise vollständig, entfernt wird;
wobei in einem nächsten Schritt die Flüssigkeit auf eine vorbestimmte Temperatur erwärmt oder abgekühlt wird und nach dem Erreichen der vorbestimmten Temperatur durch die Filtereinheit (31) geführt wird,
wobei vor und/oder nach der Filtereinheit (31) eine physikalische Eigenschaft oder eine physikalische und eine chemische Eigenschaft der Flüssigkeit bestimmt wird, und in einem letzten Schritt die gereinigte Flüssigkeit dem Flüssigkeitskreislauf (31) der mobilen Vorrichtung (2) wieder zugeführt wird, oder die gereinigte Flüssigkeit in einen Tank (45) der Reinigungsvorrichtung geführt wird und der mobilen Vorrichtung (2) frische Flüssigkeit zugeführt wird, **dadurch gekennzeichnet, dass** die Bestimmung der Eigenschaft die Erfassung der Anzahl der sich in der Flüssigkeit befindlichen metallischen Partikel umfasst bzw. beinhaltet,
wobei bei der Bestimmung vor der Filtereinheit (31) und wenn die Anzahl der erfassten Partikel grösser ist, als ein vordefinierter Wert, ein Warnsignal generiert wird, welches den Benutzer auf einen Defekt an der mobilen Vorrichtung hinweist, oder
wobei bei der Bestimmung nach der Filtereinheit (31) und beim Überschreiten einer vorbestimmten Abweichung zwischen Istwert und Sollwert, die Flüssigkeit in einen Tank (45) der Reinigungsvorrichtung geführt wird, wobei dann der mobilen Vorrichtung frische Flüssigkeit zugeführt wird.

2. Verfahren nach Anspruch 1, **dadurch gekennzeichnet, dass** die Bestimmung der Eigenschaft die Messung eines Istwertes der Viskosität mittels eines Viskosimeter (37) beinhaltet, und dass dieser Istwert mit einem vorbestimmten Sollwert verglichen wird,
wobei bei der Messung der Viskosität nach der Filtereinheit (31) und beim Überschreiten einer vorbestimmten Abweichung zwischen Istwert und Sollwert, die Viskosität durch Beigabe eines Additivs und/oder einer zur Flüssigkeit artgleichen Flüssigkeit korrigiert wird, oder
wobei bei der Messung der Viskosität nach der Filtereinheit (31) und beim Überschreiten einer vorbestimmten Abweichung zwischen Istwert und Sollwert, die Flüssigkeit in einen Tank (45) der Reinigungsvorrichtung geführt wird, wobei dann der mobilen Vorrichtung frische Flüssigkeit zugeführt wird.

3. Verfahren nach einem der vorhergehenden Ansprüche, **dadurch gekennzeichnet, dass** vor und/oder nach der Filtereinheit ein vorbestimmtes Volumen der Flüssigkeit durch ein Absperrorgan in mindestens einen externen Behälter geführt wird, wobei das entnommene Volumen durch Zuführen von frischer Flüssigkeit vor der Rückführung ausgeglichen wird.

4. Verfahren nach Anspruch 2, **dadurch gekennzeichnet, dass** die Viskosität kontinuierlich während des gesamten Reinigungsvorgangs gemessen wird, wobei laufend ein Mittelwert gebildet wird, welcher dem Istwert entspricht, oder dass die Viskosität während eines Zeitfensters gemessen wird, wobei über die Dauer des Zeitfensters ein Mittelwert gebildet wird, welcher dem Istwert entspricht.

5. Verfahren nach einem der Ansprüche, 2-4, **dadurch gekennzeichnet, dass** bei oder nach der Entnahme der Flüssigkeit aus dem Flüssigkeitskreislauf der mobilen Vorrichtung das aus der Vorrichtung entnommene Entnahmevolumen erfasst wird, wobei nach dem Schritt des Bestimmens der Viskosität der Flüssigkeit ein Additiv und/oder die artgleiche Flüssigkeit beigegeben wird, bis ein vorbestimmtes Sollvolumen erreicht wird, wobei die hinzugefügten Teile derart gewählt sind, dass die Viskosität auf einen vorbestimmten Sollwert korrigiert wird.

6. Verfahren nach einem der vorhergehenden Ansprüche, **dadurch gekennzeichnet, dass** die vorbestimmte Temperatur im Bereich von 40°C bis 90 °C, insbesondere im Bereich von 45°C bis 75°C, besonders bevorzugt über mindestens 50°C, liegt.

7. Verfahren nach einem der vorhergehenden Ansprüche, **dadurch gekennzeichnet, dass** der gereinigten Flüssigkeit durch das mobile Reinigungsmodul ein Additiv zugegeben wird.

8. Mobiles Reinigungsmodul (1) zur Durchführung des Verfahrens nach einem der Ansprüche 1 bis 7, **dadurch gekennzeichnet, dass** das mobile Reinigungsmodul (1) mindestens eine Anschlussstelle (3, 4, 5, 6) zur Verbindung mit der mindestens einen Anschlussstelle der mobilen Vorrichtung (2), ein Temperaturelement (28), mindestens ein Messmittel zur Bestimmung von mindestens einer physikalischen Eigenschaft oder mindestens einer physikalischen und mindestens einer chemischen Eigenschaft der Flüssigkeit und eine Filtereinheit (27), welche mit der mindestens einen Anschlussstelle (3, 4, 5, 6) über ein Rohrleitungssystem in Verbindung steht, umfasst,
wobei über die Verbindung der Anschlussstellen (3, 4, 5, 6) der mobilen Vorrichtung mit denjenigen des mobilen Reinigungsmoduls die Flüssigkeit mindestens teilweise, vorzugsweise vollständig aus dem Flüssigkeitskreislauf der mobilen Vorrichtung entnehmbar ist,
wobei die Flüssigkeit über das Temperaturelement (28) auf eine vorbestimmte Temperatur erwärmbar oder abkühlbar ist und nach dem Erreichen der vorbestimmten Temperatur durch das Filterelement (27) hindurchführbar und reinigbar ist,
wobei das mindestens eine Messmittel vor und/oder nach der Filtereinheit (27) angeordnet ist, und
wobei die gereinigte Flüssigkeit über die besagte Verbindung wieder in den Flüssigkeitskreislauf (31) zuführbar ist, **dadurch gekennzeichnet, dass** das Messmittel mindestens ein vor und/oder nach der Filtereinheit angeordneter Qualitätssensor (37) ist, mit welchem die metallischen Partikel in der Flüssigkeit erfassbar sind,
wobei die Vorrichtung so eingerichtet ist,
dass bei der Bestimmung vor der Filtereinheit (31) und wenn die Anzahl der erfassten Patrikel grösser ist als ein vordefinierter Wert ein Warnsignal generiert wird, welches den Benutzer auf einen Defekt an der mobilen Vorrichtung hinweist, oder dass bei der Bestimmung nach der Filtereinheit (31) und beim Überschreiten einer vorbestimmten Abweichung zwischen Istwert und Sollwert, die Flüssigkeit in einen Tank der Reinigungsvorrichtung geführt wird, wobei dann der mobilen Vorrichtung frische Flüssigkeit zugeführt wird.

9. Mobiles Reinigungsmodul (2) nach Anspruch 8, **dadurch gekennzeichnet, dass** das Reinigungsmodul weiterhin eine Pumpe (10) umfasst, mittels welcher die Flüssigkeit aus dem Flüssigkeitskreislauf entnehmbar ist.

10. Reinigungsmodul nach Anspruch 8 oder 9, **dadurch gekennzeichnet, dass** die Anschlussstelle seitens des mobilen Reinigungsmoduls (1) als Sonde ausgebildet ist, welche in den Flüssigkeitskreislauf (31) einführbar ist.

11. Reinigungsmodul nach einem der Ansprüche 8 bis 10, **dadurch gekennzeichnet, dass** das Reinigungsmodul (2) einen Zusatzbehälter (25) zur Aufnahme von der gereinigten Flüssigkeit und/oder einer neuen Flüssigkeit und/oder einem Additiv umfasst, wobei die Flüssigkeit im Zusatzbehälter in den Flüssigkeitskreislauf (31) der mobilen Vorrichtung abgebbar ist.

12. Reinigungsmodul nach einem der Ansprüche 8 bis 11, **dadurch gekennzeichnet, dass** das Reinigungsmodul (2) einen Behälter (24) umfasst, in welchem die entnommene Flüssigkeit speicherbar ist, und dass das Reinigungsmodul einen weiteren Behälter (25) beinhaltet, in welchem die gereinigte Flüssigkeit speicherbar ist.

13. Reinigungsmodul nach einem der Ansprüche 8 bis 12, **dadurch gekennzeichnet, dass** das Reinigungsmodul Messmittel zur Erfassung des Istvolumens der aus dem Flüssigkeitskreislauf entnommenen Flüssigkeit und Mittel zur Berechnung eines Differenzvolumens zwischen dem Istvolumen und einem vorbestimmten Sollvolumen umfasst.

14. Reinigungsmodul nach einem der Ansprüche 8 bis 13, **dadurch gekennzeichnet, dass** das Messmittel ein nach der Filtereinheit (27) angeordnetes Viskosimeter (36) ist, mit dem der Istwert der Viskosität der Flüssigkeit bestimmbar ist, wobei der Istwert mit einem vorbestimmten Sollwert vergleichbar ist, und
dass entweder beim Überschreiten einer vorbestimmten Abweichung zwischen Istwert und Sollwert, die Viskosität durch Beigabe eines Additivs und/oder einer zur Flüssigkeit artgleichen Flüssigkeit über ein mit dem Leitungssystem in Verbindung stehendem Vorratsbehälter (38) mit Dosiervorrichtung (39) korrigierbar ist, oder
dass in einem optionalen Schritt beim Überschreiten einer vorbestimmten Abweichung zwischen Istwert und Sollwert, die Flüssigkeit in einen Tank der Reinigungsvorrichtung geführt wird, wobei dann der mobilen Vorrichtung frische Flüssigkeit zugeführt wird.

15. Reinigungsmodul nach einem der Ansprüche 8 bis 14, **dadurch gekennzeichnet, dass** ein Viskosimeter (44) vor der Filtereinheit (37) angeordnet ist.

## Claims

1. A cleaning method for liquids in a liquid cycle (31) of a mobile device (2) having a mobile cleaning module (1), wherein the mobile cleaning module (1) comprises at least one connection element (3, 4, 5, 6) to form a connection with said liquid cycle (31) such that the liquid can be extracted from said liquid cycle (31), at least one filter unit (27) for cleaning said liquid (3, 4), and a connection element (3, 4) to establish a connection with said liquid cycle (31), so that the liquid can be returned to the liquid cycle, wherein
in a first step, the mobile cleaning module (1) is connected with the liquid cycle via the connection elements (3, 4, 5, 6),
in a next step the liquid is extracted from the liquid cycle (31) at least partially, preferably completely, whereas in a further step the liquid is heated up or cooled down to a pre-determined temperature, and routed through the filter unit (31) once the pre-determined temperature is reached,
wherein upstream and/or downstream of the filter unit (31) a physical property or a physical and a chemical property of said liquid are determined, and
in a last step, the cleaned liquid is returned to the liquid cycle (31) of the mobile device (2), or the cleaning liquid can be supplied to a tank (45) of the cleaning device, and the mobile device (2) being supplied with fresh liquid, **characterized in that** the determination of the property comprises and/or includes the measurement of the number of metal particles contained in the liquid,
whereas in case of said determination taking place upstream of the filter unit (31), and if the number of particles measured is higher than a pre-defined value, an alert signal is generated, pointing out to the user that there is a defect at the mobile device, or
whereas in case of said determination takes place downstream of the filter unit (31) and a pre-determined deviation between actual value and set value is exceeded, the liquid is supplied into a tank (45) of the cleaning device, whereas in this case, the mobile device is supplied with fresh liquid.

2. A method according to claim 1, **characterized in that** the determination of the property comprises the measurement of an actual value of the viscosity using a viscometer (37), and that the actual value is compared with a pre-determined set value,
wherein during measurement of the viscosity downstream of the filter unit (31) and upon exceeding a pre-determined deviation between actual value and set value, the viscosity is corrected by adding to the liquid an additive and/or a liquid of the same type as said liquid, or
wherein during measurement of the viscosity downstream of the filter unit (31) and upon exceeding a pre-determined deviation between actual value and set value, the liquid is supplied to a tank (45) of the cleaning device, whereas **in that** case the mobile device is supplied with fresh liquid.

3. A method according to any one of the preceding claims, **characterized in that** upstream and/or downstream of the filter unit, a pre-determined volume of the liquid is supplied to at least one external container through a shut-off device, wherein the volume extracted is compensated for by supplying fresh liquid before return is carried out.

4. A method according to claim 2, **characterized in that** the viscosity is continuously measured during the overall cleaning process, whereas a mean value being permanently generated that corresponds to the actual value, or **in that** the viscosity is continuously measured during a period in time, wherein a mean value is generated over the duration of said period in time corresponding to the actual value.

5. A method according to any one of the claims 2 - 4, **characterized in that** during or after extraction of the liquid from the liquid cycle of the mobile device, the extraction volume extracted from the device is measured, wherein after the step of determining the viscosity of the liquid, an additive and/or a liquid of the same type is added until a pre-determined set volume is reached, wherein the parts added are selected in such a way as to correct the viscosity to a pre-determined set value.

6. A method according to any one of the preceding claims, **characterized in that** the pre-determined temperature is situated in the range of 40 °C to 90 °C, in particular in the range of 45 °C to 75 °C, particularly preferably above at least 50 °C.

7. A method according to any one of the preceding claims, **characterized in that** an additive is added to the cleaned liquid by means of the mobile cleaning module.

8. A mobile cleaning module (1)
for carrying out a method according to any one
of the claims 1 to 7, **characterized in that** the mobile cleaning module (1)
comprises at least one connection point (3, 4, 5, 6) to connect to at least one of the connection points of the mobile device (2), a temperature element (28), at least
one measurement means to determine at least one physical property or
at least one physical property and at least one chemical property of the liquid, and a filter unit (27), which communicates with at least one connection point (3, 4, 5, 6) via a piping system,
wherein through the connection of the connection points (3, 4, 5, 6) of the mobile device with those of the mobile cleaning module, the liquid can be extracted from the liquid cycle of the mobile device partially, preferably completely,
wherein the liquid can be heated up or cooled down to a pre-determined temperature by means of the temperature element (28), and after having reached the pre-determined temperature it can be routed through the filter element (27) and cleaned,
wherein the at least one measurement means is arranged upstream and/or downstream of the filter unit (27), and
wherein the cleaned liquid can be returned to the liquid cycle (31) via said connection, **characterized in that** the measurement means is a quality probe (37) arranged upstream and/or downstream of the filter unit (27),
which can measure the metal particles contained in the liquid,
whereas the device is adjusted such
that in case of the determination taking place upstream of the filter unit (31), and if the number of particles measured is higher than a pre-defined value, an alert signal is generated, pointing out to the user that there is a defect at the mobile device, or
that in case of said determination taking place downstream of the filter unit (31) and a pre-determined deviation between actual value and set value is exceeded, the liquid is supplied into a tank of the cleaning device, whereas in this case, the mobile device is supplied with fresh liquid.

9. Mobile cleaning module (2) according to claim 8, **characterized in that** the cleaning module (2) further comprises a pump (10) by means of which the liquid can be extracted from the liquid cycle.

10. Cleaning module according to claim 8 or 9, **characterized in that** the connection point on the side of the mobile cleaning device (1) is laid out to form a probe, which can be introduced into the liquid cycle (31).

11. Cleaning module according to any one of the claims 8 to 10, **characterized in that** the cleaning module (2) comprises an add-on container (25) to receive to the cleaned liquid and/or the new liquid and/or an additive, wherein the liquid in the add-on container can be discharged to the liquid cycle (31) of the mobile device.

12. Cleaning module according to any one of the claims 8 to 11, **characterized in that** the cleaning module (2) comprises a container (24), in which the extracted liquid can be stored, and **in that** the cleaning module comprises a further container (25), in which the cleaned liquid can be stored.

13. Cleaning module according to any one of the claims 8 to 12, **characterized in that** the cleaning module comprises measurement means to measure the actual volume of the liquid extracted from the liquid cycle, and means to calculate a differential volume between the actual volume and a pre-determined set volume.

14. Cleaning module according to any one of the claims 8 to 13, **characterized in that** the measurement means is a viscometer (36) arranged downstream of the filter unit (27), by means of which the actual viscosity value of the liquid can be determined, wherein the actual value is comparable with a pre-determined set value, and
**in that** upon exceeding of a pre-determined deviation between actual value and set value, the viscosity can be corrected by adding an additive and/or a liquid of the same type as said liquid via a storage container (38) with metering device (39) communicating via a piping system, or
**in that** by an optional step upon exceeding of a pre-determined deviation between actual value and set value, the liquid is supplied into a tank of the cleaning device, whereas **in that** case the mobile device is supplied with fresh liquid.

15. Cleaning module according to any one of the claims 8 to 14, **characterized in that** a viscometer (44) is arranged upstream of the filter unit (37).

## Revendications

1. Procédé de purification pour les liquides d'un circuit fluide (31) d'un dispositif mobile (2) ayant un module de purification mobile (1),
dans lequel le module de purification mobile (1) comporte au moins un élément de connexion (3, 4, 5, 6) servant à établir une connexion avec le circuit fluide (31) de sorte que le dit liquide puisse être retiré du dit circuit fluide (31), au moins une unité de filtrage (27) pour la purification du liquide, et un élément de connexion (3, 4) servant à établir une connexion avec le circuit fluide (31) de sorte que le liquide puisse être recyclé dans le circuit fluide, suivant lequel
dans une première étape, le module de purification mobile (1) est connecté avec le circuit fluide par le biais des éléments de connexion (3, 4, 5, 6),
suivant lequel dans une prochaine étape, le liquide est réchauffé ou refroidi à une température prédéterminée, et après avoir atteint la dite température prédéterminée, le liquide est fait passer à travers l'unité de filtrage (31),
suivant lequel en amont et/ou en aval de l'unité de filtrage (31), une propriété physique, ou une propriété physique et une propriété chimique du liquide sont déterminées,
dans une dernière étape, le liquide purifié est recyclé au circuit fluide (31) du dispositif mobile (2), ou le liquide purifié est convoyé dans un réservoir (45) du dispositif de purification, et du liquide frais est ajouté au dispositif mobile (2) **caractérisé en ce que**
la détermination de la propriété comprend et/ou inclut la mesure du nombre des particules métalliques se trouvant dans le liquide,
dans lequel pour le cas de détermination ayant lieu en amont de l'unité de filtrage (31) et si le nombre des particules mesurées est supérieure à une valeur prédéfinie, un signal d'alarme est généré signalant à l'utilisateur à un défaut au niveau du dispositif mobile, ou
dans lequel pour le cas de détermination ayant lieu en aval de l'unité de filtrage (31) et en cas de dépassement d'un écart prédéterminé entre la valeur actuelle et la valeur de consigne, le liquide est convoyé dans une réservoir (45) du dispositif de purification, dans lequel du liquide frais est ensuite ajouté au dispositif mobile.

2. Procédé selon la revendication 1, **caractérisé en ce que** la détermination de la propriété comprend la mesure d'une valeur actuelle de la viscosité par l'intermédiaire d'un viscosimètre (37), et que cette valeur actuelle est comparée avec une valeur de consigne prédéterminée,
suivant lequel pour le cas de mesure de la viscosité ayant lieu en aval de l'unité de filtrage (31) et en cas de dépassement d'un écart prédéterminé entre la valeur actuelle et la valeur de consigne, la viscosité est corrigée par l'ajout d'un adjuvant et/ou d'un liquide étant du même type que le dit liquide, ou
suivant lequel pour le cas de mesure de la viscosité ayant lieu en aval de l'unité de filtrage (31) et en cas de dépassement d'un écart prédéterminé entre la valeur actuelle et la valeur de consigne, le liquide est convoyé au réservoir (45) du dispositif de purification, et dans lequel du liquide frais est ensuite ajouté au dispositif mobile.

3. Procédé selon l'une quelconque des revendications précédentes, **caractérisé en ce qu'**en amont et/ou en aval de l'unité de filtrage, un volume défini du liquide est convoyé dans au moins un récipient externe par le biais d'un organe d'obturation, dans lequel le volume retiré est remplacé par l'amenée du liquide frais avant de procéder et recyclage.

4. Procédé selon la revendication 2, **caractérisé en ce que** la viscosité est mesurée de façon continue tout au long du processus de purification, en calculant en continu une moyenne laquelle correspond à la valeur actuelle, ou que la viscosité est mesurée pendant une fenêtre temporelle où une moyenne est calculée pour la durée de la fenêtre temporelle laquelle correspond à la valeur actuelle.

5. Procédé selon l'une des revendications 2-4, **caractérisé en ce que**
lors ou après le retirage du liquide du circuit fluide du dispositif mobile, le volume de retirage retiré du dispositif est mesuré, dans lequel après l'étape de la mesure de la viscosité, un adjuvant et/ou un liquide du même type que ledit liquide est ajouté jusqu'au point où un volume de consigne prédéterminé serait atteint, dans lequel les portions ajoutées sont choisies de manière à corriger la viscosité à une valeur de consigne prédéterminée.

6. Procédé selon l'une quelconque des revendications précédentes, **caractérisé en ce que** la température prédéterminée se situe dans la gamme entre 40 °C et 90°C, en particulier dans la gamme entre 45°C et 75°C, particulièrement de préférence se situant au-dessus d'au moins 50°C.

7. Procédé selon l'une quelconque des revendications précédentes, **caractérisé en ce qu'**un adjuvant est ajouté au liquide purifié par le biais du dispositif de purification mobile.

8. Module de purification mobile (1) destiné
à effectuer un procédé selon l'une des revendications 1 à 7, **caractérisé en ce que** le module de purification mobile (1) comprend au moins un point de connexion (3, 4, 5, 6) pour établir une connexion avec au moins un point de connexion du dispositif mobile (2), un élément de température (28), au moins un moyen de mesure visant à la détermination d'au moins une propriété physique ou d'au moins une propriété physique et d'au moins une propriété chimique du liquide et une unité de filtrage (27) communiquant avec au moins l'un point de connexion (3, 4, 5, 6) par le biais d'un système de tuyauterie,
dans lequel le liquide peut être retiré du circuit fluide du dispositif mobile au moins partiellement, de préférence complètement par le biais de la connexion des points de connexion (3, 4, 5, 6) du dispositif mobile avec ceux du module de purification mobile,
dans le quel le liquide, par le biais de l'élément de température (28), peut être réchauffé ou refroidi à une température prédéfinie, et après avoir atteint cette température prédéfinie, peut être fait passé à travers l'élément de filtrage (27) et purifié,
dans lequel au moins l'un moyen de mesure est disposé en amont et/ou en aval de l'unité de filtrage (27), et
dans lequel le liquide purifié peut être recyclé par le bais de la dite connexion dans le circuit fluide (31), **caractérisé en ce que** le moyen de mesure est au moins un capteur de qualité (37) disposé en amont et/ou en aval de l'unité de filtrage, permettant de détecter les particules métalliques se trouvant dans le liquide,
dans lequel le dispositif est réglé de sorte que
lors de la détermination ayant lieu en amont de l'unité de filtrage (31), et que le nombre des particules détectées est supérieur à une valeur prédéfinie, un signal d'alarme soit généré signalant à l'utilisateur à un défaut au niveau du dispositif mobile, ou
dans lequel pour le cas de détermination ayant lieu en aval de l'unité de filtrage (31) et en cas de dépassement d'un écart prédéterminé entre la valeur actuelle et la valeur de consigne, le liquide est convoyé dans un réservoir du dispositif de purification, dans lequel du liquide frais est ensuite ajouté au dispositif mobile.

9. Module de purification mobile (2) selon la revendication 8, **caractérisé en ce que** le module de purification comprend en plus une pompe (10), à l'aide de laquelle le liquide peut être retiré du circuit fluide.

10. Module de purification selon la revendication 8 ou 9, **caractérisé en ce que** le point de connexion se situant du côté du module de purification (1) est conçu sous forme d'une sonde qui peut être introduite dans le circuit fluide (31).

11. Module de purification selon l'une des revendications 8 à 10, **caractérisé en ce que** le module de purification (2) comprend un récipient supplémentaire (25) pour recevoir le liquide purifié et/ou un nouveau liquide et/ou un adjuvant, dans lequel le liquide se trouvant dans le récipient supplémentaire peut être déchargé dans le circuit fluide (31) du dispositif mobile.

12. Module de purification selon l'une des revendications 8 à 11, **caractérisé en ce que** le module de purification (2) comprend un récipient (24), dans lequel le liquide retiré peut être entreposé, et que le module de purification comprend un autre récipient (25), dans le liquide purifié peut être entreposé.

13. Module de purification selon l'une des revendications 8 à 12, **caractérisé en ce que** le module de purification comprend des moyens de mesure visant à la détection du volume actuel du liquide retiré du circuit fluide, et des moyens servant au calcul d'un volume de différence entre le volume actuel et un volume de consigne prédéterminé.

14. Module de purification selon l'une des revendications 8 à 13, **caractérisé en ce que** le moyen de mesure est un viscosimètre (36) disposé en aval de l'unité de filtrage (27) permettant de déterminer la valeur actuelle de la viscosité du liquide, dans lequel la valeur actuelle peut être comparée avec une valeur de consigne prédéterminée, et
qu'en cas de dépassement d'un écart prédéterminé entre la valeur actuelle et la valeur de consigne, la viscosité peut être corrigée par le biais de l'ajout d'un adjuvant et/ou d'un liquide du même type que le dit liquide par l'intermédiaire d'un récipient d'entreposage (38) ayant un dispositif de dosage (39) communiquant avec le dit système de tuyauteries, ou
que dans une étape optionnelle, en cas de dépassement
d'un écart prédéterminé entre la valeur actuelle et la valeur de consigne, le liquide est convoyé dans le réservoir du dispositif de purification, dans lequel du liquide frais est ensuite ajouté au dispositif mobile.

15. Module de purification selon l'une des revendications 8 à 14, **caractérisé en ce qu'**un viscosimètre (44) est disposé en amont de l'unité de filtrage (37).
